Europäisches Patentamt

European Patent Office

Office européen des brevets

(19)

(11) **EP 0 500 464 B1**

(12) **FASCICULE DE BREVET EUROPEEN**

(45) Date de publication et mention
de la délivrance du brevet:
**24.04.1996  Bulletin 1996/17**

(51) Int Cl.$^6$: **G05D 3/12**, F16C 32/04

(21) Numéro de dépôt: **92400444.3**

(22) Date de dépôt: **19.02.1992**

(54) **Procédé de commande numérique de moyens électromagnétiques de positionnement par sustentation magnétique active d'un organe flexible et dispositif pour sa mise en oeuvre**

Verfahren zur numerischen Steuerung elektromagnetischer Einrichtungen zur Positionierung mit aktiver magnetischer Lagerung eines flexiblen Organs und Vorrichtung zu seiner Durchführung

Method for digitally controlling electromagnetic means for positioning with active magnetic suspension of a flexible member and apparatus for implementing it

(84) Etats contractants désignés:
**CH DE GB IT LI**

(30) Priorité: **20.02.1991 FR 9102040**

(43) Date de publication de la demande:
**26.08.1992  Bulletin 1992/35**

(73) Titulaire: **FRAMATOME
F-92400 Courbevoie (FR)**

(72) Inventeur: **Gelin, Alain
F-71200 Le Creusot (FR)**

(74) Mandataire:
**Habasque, Etienne Joel Jean-François et al
Cabinet Lavoix
2, Place d'Estienne d'Orves
F-75441 Paris Cédex 09 (FR)**

(56) Documents cités:
**DE-A- 3 913 053          DE-A- 3 937 687
US-A- 4 912 387**

- **TECHNISCHE RUNDSCHAU vol. 80, no. 22, 27 mai 1988, pages 64-66, Bern, CH; A. TRAXLER et al.: "Aktive magnetische Rotorlagerung"**
- **TECHNISCHE RUNDSCHAU no. 24, 14 juin 1983, page 31, Bern, CH; A. TRAXLER et al.: "Die elektromagnetische Lagerung von Rotoren"**
- **REGELUNGSTECHNIK vol. 26, no. 1, janvier 1978, pages 10-15, München, DE; G. SCHWEITZER: "Ein aktives magnetisches Rotorlager - Auslegung und Anwendung"**
- **IEEE TRANSACTIONS ON INDUSTRIAL ELECTRONICS vol. 37, no. 1, février 1990, pages 19-27, New York, US; R.D. WILLIAMS et al.: "Digital Control of Active Magnetic Bearings"**
- **PROCEEDINGS OF THE 24TH INTERSOCIETY ENERGY CONVERSION ENGINEERING CONFERENCE vol. 3, août 1989, pages 1491-1498, New York, US; R.R. HUMPHRIS et al.: "Diagnostic and Control Features with Magnetic Bearings"**
- **D.Vischer: "Sensorlose und spannungsgesteuerte Magnetlager", Thèse du doctorat à ETH Zürich Nr.8665,CH,1988.**

**Description**

La présente invention concerne un procédé de commande optimale de moyens électromagnétiques de positionnement par sustentation magnétique active d'un organe flexible, tel qu'un rotor de machine tournante et un dispositif pour la mise en oeuvre de ce procédé.

On connaît déjà dans l'état de la technique, de tels moyens de sustentation qui sont également généralement appelés " paliers magnétiques actifs".

Pour des descriptions plus détaillées de la structure et du fonctionnement de ceux-ci, on pourra par exemple se reporter aux Techniques de l'Ingénieur, fonction guidage en rotation - paliers magnétiques, dans lesquelles H. HABERMANN présente des paliers magnétiques actifs fabriqués par la Société de Mécanique Magnétique S2M - Vernon - France.

Deux notices techniques publiées par cette société décrivent également ce type de palier, ces notices étant " Introduction aux paliers magnétiques " et " Capacité de charges des paliers magnétiques actifs".

Ces paliers magnétiques comprennent des électro-aimants qui sont disposés autour ou dans un rotor à sustenter.

Ces électro-aimants sont reliés à des moyens de commande permettant de réguler leur alimentation afin de maintenir le rotor en position, à partir d'un signal d'erreur déduit d'un signal de position réelle du rotor et d'un signal de référence.

Ces moyens de commande comprennent donc en général des moyens de comparaison de la position de référence et de la position réelle pour déduire à travers un circuit électronique approprié un signal de correction à appliquer à ces électro-aimants.

Le signal de position réelle est délivré par des capteurs de position mesurant par exemple l'entrefer entre le rotor et des bobines de mesure, disposées autour de celui-ci et permettant de mesurer des variations de champ magnétique engendrées dans ces bobines lors de déplacements du rotor par rapport à celles-ci.

Dans les paliers magnétiques connus, le signal d'erreur est introduit dans un dispositif analogique de traitement de signaux, constitué par exemple par un régulateur de type PID, qui délivre des signaux de commande permettant de réguler l'alimentation des électro-aimants afin de ramener le rotor dans sa position de référence.

Cependant, ces paliers présentent un certain nombre d'inconvénients.

En effet, dans l'état de la technique, on considère que le rotor est rigide alors qu'en réalité celui-ci peut être flexible, c'est à dire que sa vitesse nominale de fonctionnement peut être située au-delà du premier mode d'arbre élastique, c'est à dire au-delà de sa troisième vitesse critique de flexion, ce qui entraîne une absence de contrôle direct des modes élastiques.

De plus, les effets gyroscopiques liés aux inerties en rotation ne sont pas pris en compte par les régulateurs développés jusqu'à aujourd'hui.

Le document TECHNISCHE RUNDSCHAU, volume 80, n° 22, du 27 mai 1988, concerne le montage d'un rotor à l'aide de paliers magnétiques actifs et évoque l'utilisation d'un modèle de corps rigide et d'une représentation modale d'un rotor élastique, comme base pour la réalisation d'un régulateur du système de paliers magnétiques.

Le modèle du régulateur décrit dans ce document est du type multivariable pour permettre la prise en compte de la flexibilité du rotor (corps rigide et modes élastiques), les différentes variables pouvant éventuellement être découplées.

L'analyse du procédé décrit dans ce document fait apparaître que l'on relève le comportement dynamique de l'organe et une variable représentative du comportement dynamique de chaque moyen électromagnétique.

On décompose ensuite ce comportement en réponses dans chacun de ses modes de corps solide et de ses modes élastiques traversés et approchés pour atteindre le point de fonctionnement nominal de l'organe, ce qui permet de déduire une commande des moyens électromagnétiques en fonction de ces réponses et de la variable représentative du comportement dynamique de chaque moyen électromagnétique.

Ce document mentionne l'utilisation d'une commande numérique permettant au régulateur d'être multivariable. Cependant, aucun détail de cette commande n'est donné.

Le but de l'invention est donc de résoudre ces problèmes en proposant un procédé de commande qui prenne en compte le comportement dynamique réel de l'ensemble paliers-rotor.

A cet effet, l'invention a pour objet un procédé de commande optimale de moyens électromagnétiques de positionnement par sustentation magnétique active d'un organe flexible, tel qu'un rotor de machine tournante, dans lequel on relève le comportement dynamique de l'organe et une variable représentative du comportement dynamique de chaque moyen électromagnétique, on décompose le comportement de l'organe en réponse dans chacun de ses modes de corps solide et de ses modes élastiques traversés ou approchés pour atteindre le point de fonctionnement nominal de l'organe et on commande lesdits moyens électromagnétiques en fonction desdites réponses et de la variable représentative du comportement dynamique de chaque moyen électromagnétique, pour contrôler le comportement dynamique de l'organe, caractérisé en ce qu'on représente les comportements dynamiques de l'organe flexible et des moyens électromagnétiques par un vecteur d'état qui regroupe les réponses modales en déplacement et vitesse des modes de corps solide et des modes élastiques traversés ou approchés pour atteindre le point de fonctionnement nominal de l'organe et la variable représentative du comportement dynamique de chaque moyen électromagnétique, et en ce qu'on obtient un signal de commande de chaque moyen électromagnétique par transformation matricielle du vecteur d'état représentatif des comportements dynamiques de l'organe flexible et de chaque moyen électromagnétique, à l'aide d'un opérateur de stratégie de commande optimale.

Selon un autre aspect, l'invention a également pour objet un dispositif de commande optimale de moyens électromagnétiques de positionnement par sustentation magnétique active d'un organe flexible, tel qu'un rotor de machine tournante pour la mise en oeuvre du procédé décrit précédemment, du type comportant des moyens de relevé du comportement dynamique de l'organe et d'une variable représentative du comportement dynamique de chaque moyen électromagnétique, des moyens de décomposition du comportement de l'organe en réponse dans chacun de ses modes de corps solide et de ses modes élastiques traversés ou approchés pour atteindre le point de fonctionnement nominal de l'organe et des moyens de commande desdits moyens électromagnétiques en fonction desdites réponses et de la variable représentative du comportement dynamique de chaque moyen électromagnétique, pour contrôler le comportement dynamique de l'organe, caractérisé en ce que les moyens de commande comprennent des moyens de représentation des comportements dynamiques de l'organe flexible et des moyens électromagnétiques par un vecteur d'état qui regroupe les réponses modales en déplacement et vitesse des modes de corps solide et des modes élastiques traversés ou approchés pour atteindre le point de fonctionnement nominal de l'organe et la variable représentative du comportement dynamique de chaque moyen électromagnétique, et en ce que les moyens de commande comprennent des moyens de détermination d'un signal de commande de chaque moyen électromagnétique par transformation matricielle du vecteur d'état représentatif des comportements dynamiques de l'organe flexible et de chaque moyen électromagnétique, à l'aide d'un opérateur de stratégie de commande optimale.

L'invention sera mieux comprise à l'aide de la description qui va suivre, donnée uniquement à titre d'exemple et faite en se référant aux dessins annexés, sur lesquels :

- la Fig.1 représente un schéma synoptique d'un dispositif pour la mise en oeuvre d'un procédé selon l'invention; et
- les Fig.2A et 2B représentent un organigramme illustrant le fonctionnement d'un dispositif pour la mise en oeuvre d'un procédé selon l'invention.

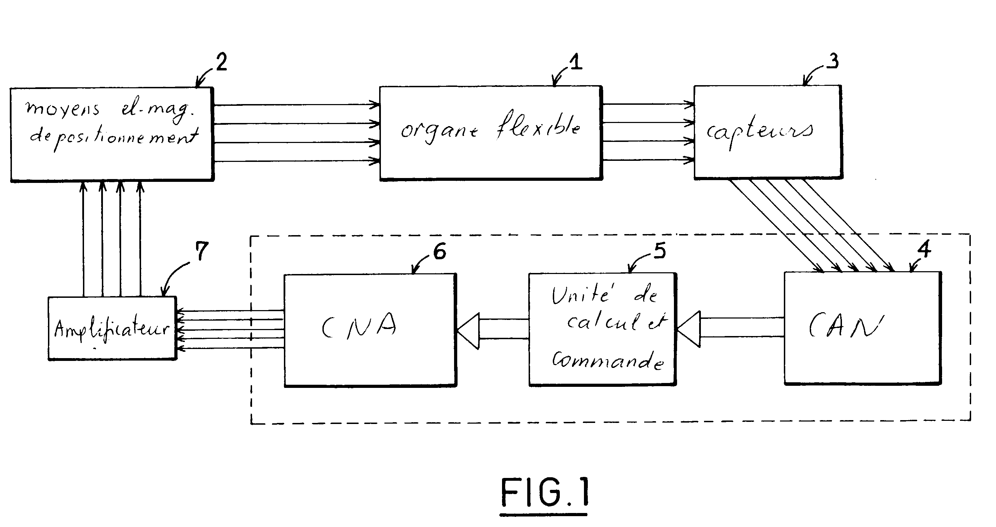

Ainsi qu'on peut le voir sur la Fig.1, un organe flexible, tel qu'un rotor de machine tournante, à sustenter magnétiquement et désigné par la référence générale 1, est maintenu dans une position de référence par des moyens électromagnétiques actifs désignés par la référence générale 2.

Ces moyens électromagnétiques actifs sont de type connu et sont par exemple constitués par des actionneurs ou des paliers magnétiques actifs comprenant des électro-aimants.

La chaîne de commande de ces moyens électromagnétiques actifs de positionnement comporte un certain nombre de capteurs-conditionneurs, désignés par la référence générale 3 sur cette figure, permettant de mesurer différents paramètres relatifs au comportement dynamique de l'ensemble paliers-organe flexible et en particulier des déplacements radiaux et des vitesses de déplacement radial de l'organe (par opposition à la vitesse de rotation), dont il y a lieu de commander la sustentation, ainsi que des intensités circulant dans les moyens électromagnétiques de positionnement 2.

Les signaux représentatifs de ces paramètres sont mis en forme dans ces capteurs-conditionneurs 3 puis sont transmis à des moyens de conversion analogique-numérique désignés par la référence 4 avant d'être transférés dans une unité de calcul et de commande 5, intégrée par exemple dans un micro-calculateur, permettant, comme cela sera décrit plus en détail par la suite, de reconstruire sous forme numérique un vecteur d'état représentatif des comportements dynamiques de l'organe flexible et de chaque moyen électromagnétique et de calculer une commande à appliquer aux moyens électromagnétiques pour assurer une sustentation correcte de l'organe flexible.

Les signaux de sortie de cette unité de calcul et de commande 5 sont introduits dans des moyens de conversion numérique-analogique 6 permettant d'attaquer des moyens d'amplification 7 dont la sortie commande les moyens électromagnétiques de positionnement 2.

On conçoit que tout écart entre la position de référence et la position réelle de l'organe flexible est détecté et permet à l'unité de calcul et de commande de déterminer les corrections à apporter à la commande des différents moyens électromagnétiques de sustentation, pour ramener cet organe flexible dans sa position de référence.

Ainsi qu'on l'a mentionné précédemment, les capteurs-conditionneurs 3 sont adaptés pour relever le comportement dynamique de l'organe flexible à positionner .

Ce comportement est caractérisé par les déplacements $q$ et les vitesses correspondantes $\dot{q}$ de celui-ci. Ces capteurs sont également adaptés pour relever une variable représentative du comportement dynamique de chaque moyen électromagnétique, cette variable étant par exemple l'intensité du courant traversant l'électroaimant de chacun de ceux-ci.

Ces différentes informations sont transmises par ces capteurs à l'unité de calcul et de commande, pour leur traitement dans celle-ci après numérisation.

Cette unité est en effet adaptée pour décomposer le comportement de l'organe en réponse dans chacun de ses modes de corps solide et de ses modes élastiques traversés ou approchés pour atteindre le point de fonctionnement nominal de cet organe.

Cette décomposition est réalisée à partir des informations de déplacement et de vitesse correspondante de cet organe flexible.

Après cette opération de décomposition, l'unité de calcul et de commande 5 construit un vecteur d'état représentatif des comportements dynamiques de l'organe et des moyens électromagnétiques de sustentation, ce vecteur d'état regroupant les réponses modales en déplacement et vitesse des modes de corps solide et des modes élastiques traversés ou approchés pour atteindre le point de fonctionnement nominal de l'organe et la variable représentative du comportement dynamique de chaque moyen électromagnétique.

Ceci permet alors à cette unité de calcul et de commande de déterminer le signal de commande à appliquer à chaque moyen électromagnétique par transformation matricielle de ce vecteur d'état à l'aide d'un opérateur préalablement déterminé au moyen d'une stratégie de commande optimale.

Cet opérateur de stratégie de commande optimale est obtenu d'une part par modélisation sous forme de représentation d'état des comportements dynamiques de l'organe flexible et des moyens électromagnétiques et d'autre part, par minimisation d'un critère quadratique, comme cela sera décrit plus en détail par la suite.

La commande à appliquer aux moyens électromagnétiques étant principalement fonction du vecteur d'état :

$$X = \{ q, \dot{q}, I \}^t$$, où q représente les déplacements de l'organe, $\dot{q}$ les vitesses correspondantes et I les intensités représentatives du comportement dynamique des moyens électromagnétiques, celui-ci doit être accessible à tout instant de commande ou en permanence selon le cas.

Les capteurs de position de l'organe permettent de mesurer un vecteur de sortie Y qui regroupe les déplacements de cet organe au droit des moyens électromagnétiques.

Ainsi, à partir de la mesure de Y (i) à un instant donné (i) et du calcul à l'instant (i-1) de la commande déjà appliquée, u(i-1), il est possible à cette unité de calcul et de commande d'estimer, c'est à dire d'identifier ou d'observer, le vecteur d'état X(i), sur lequel s'applique principalement la commande u(i) à l'instant donné.

Cette reconstruction se fait uniquement sur les variables modales exprimées en déplacement q et vitesse $\dot{q}$, dans la mesure où les intensités traversant les moyens électromagnétiques, ou de manière générale les variables représentatives des comportements dynamiques des moyens électromagnétiques, sont directement observables et mesurables.

L'intégration v(i) de l'écart e(i) entre positions de référence et réelle à l'instant donné, peut se faire soit de façon numérique soit de façon analogique, cette dernière solution étant la plus précise et la plus rapide.

On dispose alors à l'instant donné (i), sous forme numérique, de différents vecteurs sur lesquels s'applique la commande :

X(i), v(i), z (consigne).

Il est alors possible de calculer la commande à appliquer en effectuant la transformation matricielle suivante :

$$U (i) = - L.X(i) - M.v(i) + N.z$$

Les matrices de contrôle L, M et N sont déterminées au préalable, une fois pour toute, sous la forme d'un calcul purement scientifique et sont entrées et stockées dans l'unité de calcul et de commande.

Ces matrices conduisant au contrôle ultérieur de l'organe flexible, sont déterminées à partir de la modélisation sous forme de représentation d'état de l'organe flexible, des forces non linéaires engendrées par les moyens électromagnétiques, des comportements dynamiques de ces différents moyens et du critère quadratique à minimiser selon la stratégie de commande optimale.

La modélisation du comportement dynamique de l'ensemble comprend trois points, à savoir la modélisation du comportement dynamique de l'organe flexible, la modélisation des efforts exercés par les différents moyens électromagnétiques et la modélisation du comportement dynamique de ces moyens électromagnétiques.

La modélisation du comportement dynamique de l'organe flexible est obtenue par une modélisation de type éléments finis à laquelle s'ajoute une méthode pseudo-modale.

On ne retient dans la base pseudo-modale que les modes de corps solide et les modes élastiques traversés ou approchés pour atteindre le point de fonctionnement nominal de l'organe. Ce sont en effet les seuls modes que l'on désire contrôler.

On a par ailleurs intérêt à restreindre ce nombre de modes pour augmenter la rapidité du traitement en temps réel à effectuer (acquisition, conversion analogique-numérique, calcul de la commande, conversion numérique-analogique) et ainsi augmenter les performances du dispositif de commande (rapidité du traitement).

La modélisation des efforts exercés par les moyens électromagnétiques est une modélisation non linéaire de la forme :

$$F = \alpha \, I^2 / \varepsilon^2$$

où F représente la force magnétique, $\alpha$ est une constante, I, l'intensité parcourant les bobines des électro-aimants (moyens électromagnétiques) et qui est la variable représentative du comportement dynamique des moyens électromagnétiques, et $\varepsilon$ l'entrefer entre ces moyens et l'organe flexible à contrôler.

La modélisation du comportement dynamique des différents moyens électromagnétiques est une formulation non linéaire obtenue par application de la loi d'Ohm généralisée.

La représentation d'état du système est obtenue après linéarisation, autour d'une position d'équilibre stable recherchée de l'organe, des formulations précédentes, à savoir du comportement dynamique de l'organe, des forces engendrées par les différents moyens électromagnétiques et du comportement dynamique de ces différents moyens. Cette représentation d'état du système correspond à une formulation linéaire particulière de son comportement dynamique.

Cette représentation d'état est de la forme :

$$\dot{X} = AX + BU$$
$$Y = CX$$

où le vecteur $X = [q, \dot{q}, I]^t$, contient les déplacements modaux $q$ et les vitesses modales correspondantes $\dot{q}$, caractérisant le comportement dynamique de l'organe flexible, c'est à dire une décomposition du comportement dynamique de l'organe en réponse dans chacun de ses modes de corps solide et de ses modes élastiques traversés ou approchés pour atteindre le point de fonctionnement nominal de l'organe, et les intensités $I$ parcourant les bobines des différents électro-aimants, caractérisant la variable représentative du comportement dynamique de chaque moyen électromagnétique actif.

On notera que cette variable peut également être constituée par le flux magnétique.

Le vecteur $U$, appelé également vecteur de commande ou d'action, contient quant à lui, les tensions à appliquer aux bornes des bobines des différents électro-aimants, et permettant donc de commander ceux-ci, dans la mesure où ces tensions constituent les grandeurs d'action des moyens électromagnétiques.

Enfin, le vecteur de sortie $Y$ contient les grandeurs mesurables qui sont par exemple les déplacements de l'organe flexible au niveau des différents moyens électromagnétiques.

Les différents opérateurs matriciels $A$, $B$ et $C$ indiqués précédemment sont directement identifiables lors de la linéarisation des différentes formulations caractérisant le comportement dynamique de l'ensemble.

Les commandes numériques agissant à intervalle de temps constant (période d'échantillonnage), il est nécessaire de discrétiser la représentation d'état continue précédente pour obtenir la représentation d'état exprimée dans le domaine discret. Cette dernière est fonction de celle exprimée dans le domaine continu et de la période d'échantillonnage.

Les différents vecteurs précédents $X$(état), $U$(commande) et $Y$(sortie) sont définis uniquement aux instants d'échantillonnage. La période d'échantillonnage $T_e$ (ou fréquence d'échantillonnage $f_e = 1/T_e$) est fonction des moyens de traitement dans lesquels est intégrée l'unité de calcul (à savoir du type d'unité dont on dispose et des performances des cartes d'acquisition, de conversion et de calcul) et du traitement numérique à effectuer (c'est à dire du nombre d'opérations). On notera que la commande obtenue est d'autant plus performante que les moyens de calcul sont puissants (rapidité).

La minimisation d'un critère quadratique de la forme :

$$J = \{e^t\, Q\, e + v^t\, Q_v\, v + u^t\, R\, u\}\, dt$$

conduit à la commande optimale associée à l'organe flexible à contrôler.

Dans cette relation, $e$ représente l'écart entre la consigne notée $z$ et la sortie $Y$ du système défini précédemment, qui regroupe par exemple les déplacements de l'organe au droit des moyens magnétiques, $v$ représente l'intégrale de l'écart $e$, le terme $(v^t\, Q_v\, v)$ étant introduit dans le critère pour des raisons de précision, $u$ représente le vecteur d'action ou de commande défini précédemment et regroupe les tensions à appliquer aux bornes des moyens électromagnétiques, le terme $(u^t\, R\, u)$ conduisant à minimiser l'énergie de commande.

A condition de respecter certaines conditions sur les matrices de pondération qui apparaissent dans le critère ($Q$, $Q_v$, $R$), matrices qui doivent être symétriques définies positives, la minimisation du critère, en s'appuyant sur la représentation d'état, conduit à une commande qui assure la stabilité de l'organe et du dispositif de commande associé. La théorie de la commande optimale est appliquée pour définir un signal de commande de la forme :

$$u\,(i) = N.z - M.v(i) - L.x(i)$$

Les matrices $L$, $M$, $N$ sont celles qui doivent être implantées dans l'unité de calcul;

la matrice $L$ agit sur le vecteur d'état regroupant les réponses modales définies en déplacements $q$ et vitesses $\dot{q}$ de l'organe flexible à contrôler et les variables représentatives des comportements dynamiques des différents moyens électromagnétiques (intensité $I$);

la matrice $M$ agit sur l'intégrale de l'écart (pour des raisons de précision); et

la matrice $N$ agit sur la consigne $z$ du système si celle-ci est non nulle. Cette action d'anticipation est intéressante si l'on travaille en asservissement (poursuite) plutôt qu'en régulation (consigne fixe).

Les performances (degrés de stabilité et de précision) de la commande sont fixées par le choix des matrices de pondération qui apparaissent dans le critère.

Les matrices de commande prédéterminées $L$, $M$, $N$ agissant respectivement sur le vecteur d'état $X$, le vecteur $v$ intégrale de l'écart $e$ et le vecteur de consigne $z$, sont implantées dans l'unité de calcul et de commande.

La principale fonction de cette unité est donc d'effectuer en temps réel des produits matrice-vecteur pour conduire au vecteur de commande $U$ à appliquer.

Cette opération doit se faire dans un temps compatible avec la période d'échantillonnage, d'où l'utilisation d'une carte de calcul matriciel (DT Connect) spécialisée, directement intégrée dans un micro-calculateur par exemple sur l'un des bus d'extension de celui-ci, ce micro-calculateur contenant l'unité de calcul et de commande mentionnée précédemment.

Ce micro-calculateur assure les différentes fonctions suivantes :

- Acquisition du vecteur de sortie $Y$ à l'aide des capteurs de déplacement au droit par exemple des différents moyens électromagnétiques et conditionnement analogique des signaux correspondants,

- Conversion analogique-numérique du précédent vecteur $Y$, dans la mesure où les moyens de conversion analogique-numérique 4 sont intégrés directement dans ce micro-calculateur,

- Mesure analogique ou calcul numérique de l'intégrale v de l'écart e, e représentant l'écart entre la sortie Y et la consigne z,
- Estimation (ou reconstruction ou observation) de la partie du vecteur d'état X relative au comportement modal (q et q̇) à partir de la commande appliquée à l'instant précédent et du vecteur de sortie mesuré. Les composantes de ce vecteur X relatives aux intensités, c'est à dire aux variables représentatives des comportements des moyens électromagnétiques, sont mesurées directement.
- Calcul de la commande à appliquer à un instant donné en fonction des matrices L, M et N et des vecteurs d'état X, d'intégrale v de l'écart e et de consigne z suivant la relation :

$$U = - L.X - Mv + Nz$$

- Conversion numérique-analogique du vecteur de commande U dans la mesure où les moyens de conversion numérique-analogique 6 peuvent également être implantés dans ce micro-calculateur. Le signal de sortie correspondant est alors appliqué aux bornes des moyens électromagnétiques actifs après passage dans les moyens d'amplification 7, pour contrôler le comportement dynamique de l'organe flexible.

La dynamique du dispositif de commande, c'est à dire les performances de stabilité, de précision et de rapidité, dépendent principalement du choix du critère quadratique de pondération à minimiser.

Pour gagner en rapidité, il peut être intéressant d'effectuer l'intégration de l'écart de manière analogique.

Enfin, ce type de dispositif de commande travaille en régulation, c'est à dire avec une consigne z constante ou nulle et dans ce cas, le produit N.z est constant (voire nul) et peut être câblé analogiquement. Ceci permet d'augmenter les performances du dispositif de contrôle en rapidité au niveau de l'échantillonnage.

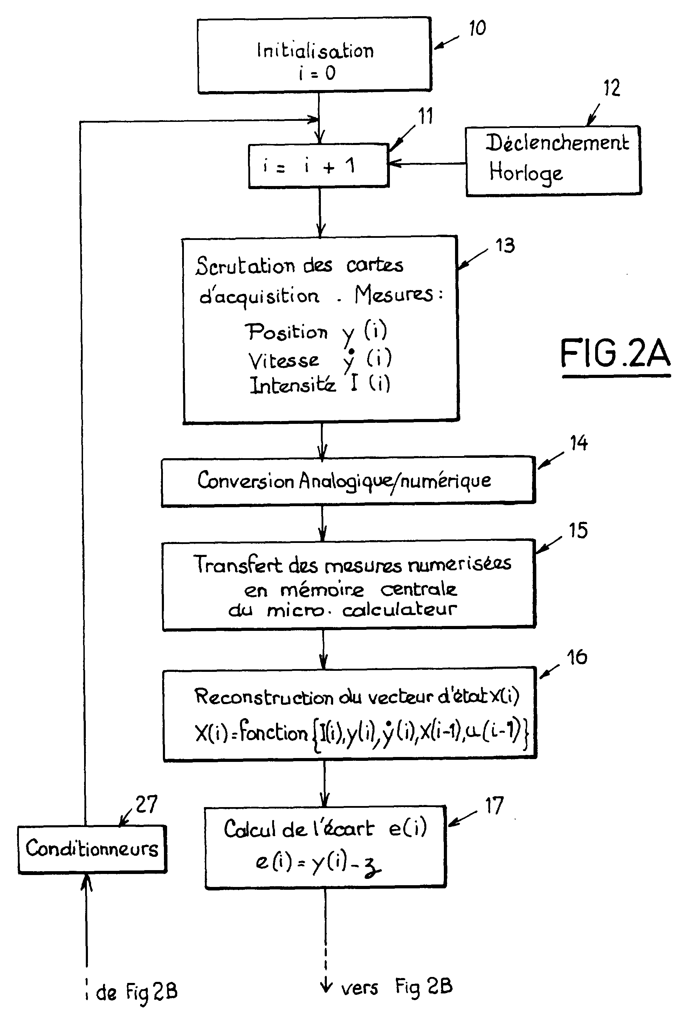

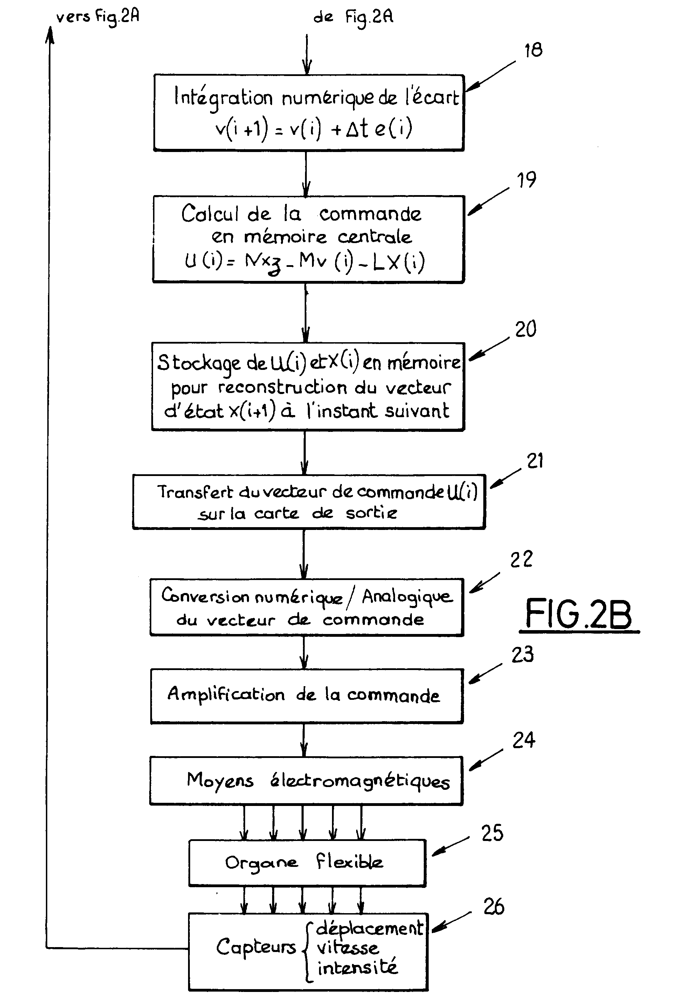

Le fonctionnement qui vient d'être décrit est illustré sur les Fig.2A et 2B.

L'organigramme représenté sur ces figures, débute par une phase 10 d'initialisation suivie d'une phase 11 d'incrémentation associée à un déclenchement 12 de l'horloge de pilotage du dispositif.

En 13, a lieu une phase de scrutation des cartes d'acquisition pour la mesure des position, vitesse et intensité, mentionnées précédemment, tandis qu'en 14, est prévue une étape de conversion analogique-numérique de ces mesures.

En 15, est prévu le transfert des mesures numérisées en mémoire centrale du micro-calculateur pour la reconstruction en 16 du vecteur d'état X(i).

La phase 17 concerne le calcul de l'écart e(i), tandis que la phase 18 concerne l'intégration numérique de cet écart.

En 19, est prévu le calcul de la commande en mémoire centrale du micro-calculateur et en 20, le stockage de U(i) ou de X(i) en mémoire pour la reconstruction du vecteur d'état X(i + 1) à l'instant suivant.

En 21, le vecteur de commande est transféré sur la carte de sortie pour sa conversion numérique-analogique en 22.

En 23, la commande est appliquée aux moyens d'électromagnétiques 24 de sustentation de l'organe flexible 25, les capteurs 26 permettant à travers les moyens de conditionnement 27, de relever les différentes mesures à l'étape 13 après incrémentation.

## Revendications

1. Procédé de commande optimale de moyens électromagnétiques de positionnement (2) par sustentation magnétique active d'un organe flexible (1), tel qu'un rotor de machine tournante, dans lequel on relève le comportement dynamique de l'organe et une variable représentative du comportement dynamique de chaque moyen électromagnétique, on décompose le comportement de l'organe en réponse dans chacun de ses modes de corps solide et de ses modes élastiques traversés ou approchés pour atteindre le point de fonctionnement nominal de l'organe et on commande lesdits moyens électromagnétiques (2) en fonction desdites réponses et de la variable représentative du comportement dynamique de chaque moyen électromagnétique, pour contrôler le comportement dynamique de l'organe, caractérisé en ce qu'on représente les comportements dynamiques de l'organe flexible et qui des moyens électromagnétiques par un vecteur d'état (X) qui regroupe les réponses modales en déplacement (q) et vitesse (q̇) des modes de corps solide et des modes élastiques traversés ou approchés pour atteindre le point de fonctionnement nominal de l'organe et la variable (I) représentative du comportement dynamique de chaque moyen électromagnétique, et en ce qu'on obtient un signal de commande de chaque moyen électromagnétique par transformation matricielle du vecteur d'état représentatif des comportements dynamiques de l'organe flexible et de chaque moyen électromagnétique, à l'aide d'un opérateur de stratégie de commande optimale.

2. Procédé selon la revendication 1, caractérisé en ce que la variable représentative du comportement dynamique de chaque moyen électromagnétique est l'intensité du courant (I) traversant celui-ci.

3. Procédé selon la revendication 1 ou 2, caractérisé en ce qu'on obtient l'opérateur de stratégie de commande optimale d'une part par modélisation sous forme de représentation d'état des comportements dynamiques de l'organe flexible et des moyens électromagnétiques et d'autre part, par minimisation d'un critère quadratique.

4. Dispositif de commande optimale de moyens électromagnétiques de positionnement par sustentation magnétique active d'un organe flexible, tel qu'un rotor de machine tournante pour la mise en oeuvre du procédé selon l'une quelconque des revendications précédentes, du type comportant des moyens (3) de relevé du comportement dynamique de l'organe et d'une variable représentative du comportement dynamique de chaque moyen électromagnétique, des moyens (5) de décomposition du comportement de l'organe en réponse dans chacun de ses modes de corps solide et de ses modes élastiques traversés ou approchés pour atteindre le point de fonctionnement nominal de l'organe et des moyens (5,7) de commande desdits moyens électromagnétiques en fonction desdites réponses et de la variable représentative du comportement dynamique de chaque moyen électromagnétique, pour contrôler le comportement dynamique de l'organe, caractérisé en ce que les moyens (5) de commande comprennent des moyens de représentation des comportements dynamiques de l'organe flexible et des moyens électromagnétiques par un vecteur d'état (X) qui regroupe les réponses modales en déplacement (q) et vitesse (q̇) des modes de corps solide et des modes élastiques traversés ou approchés pour atteindre le point de fonctionnement nominal de l'organe et la variable (I) représentative du comportement dynamique de chaque moyen électromagnétique, et en ce que les moyens (5) de commande comprennent des moyens de détermination d'un signal de commande de chaque moyen électromagnétique par transformation matricielle du vecteur d'état représentatif des comportements dynamiques de l'organe flexible et de chaque moyen électromagnétique, à l'aide d'un opérateur de stratégie de commande optimale.

5. Dispositif selon la revendication 4, caractérisé en ce qu'il comporte des moyens (3) de mesure du courant traversant chaque moyen électromagnétique, ce courant constituant la variable représentative du comportement dynamique de chaque moyen électromagnétique.

6. Dispositif selon la revendication 4 ou 5, caractérisé en ce que les moyens (5) de commande comportent des moyens de détermination de l'opérateur de stratégie de commande optimale par modélisation sous forme de représentation d'état des comportements dynamiques de l'organe flexible et des moyens électromagnétiques et par minimisation d'un critère quadratique.

7. Dispositif selon l'une quelconque des revendications 4 à 6, caractérisé en ce que les moyens de commande comprennent une unité (5) de calcul et de commande dont l'entrée est reliée à travers des moyens (4) de conversion analogique/numérique aux moyens (3) de relevé du comportement dynamique de l'organe et de la variable représentative du comportement dynamique de chaque moyen électromagnétique et dont la sortie est reliée à travers des moyens (6) de conversion numérique/analogique à des moyens d'amplification (7) pour commander lesdits moyens électromagnétiques et contrôler le comportement dynamique de l'organe.

**Patentansprüche**

1. Verfahren zur optimierten Steuerung elektromagnetischer Einrichtungen zur Positionierung (2) mit aktiver magnetischer Lagerung eines beweglichen Organs (1), wie z. B. eines Läufers einer Drehmaschine, bei dem das dynamische Verhalten des Organs und eine Variable, die das dynamische Verhalten jeder elektromagnetischen Einrichtung darstellt, abgenommen wird, sowie das Reaktionsverhalten des Organs in jede seiner Festkörper-Schwingungen und seiner durchlaufenen und angenäherten elastische Schwingungen zerlegt wird, um den nominalen Betriebspunkt des Organs zu erhalten, und die genannten elektromagnetischen Einrichtungen (2) abhängig von den genannten Reaktionen und von der Variablen, die das dynamische Verhalten jeder elektromagnetischen Einrichtung darstellt, gesteuert werden, um das dynamische Verhalten des Organs zu beherrschen, dadurch gekennzeichnet, daß das dynamische Verhalten des beweglichen Organs und der elektromagnetischen Einrichtungen durch einen Zustandsvektor (X) dargestellt wird, der die Schwingungsreaktionen hinsichtlich Verschiebungsrichtung (q) und Frequenz (q̇) der Festkörper-Schwingungen und der durchlaufenen und angenäherten elastischen Schwingungen zur Erzielung des nominalen Betriebspunkts des Organs und die Variable (I), die das dynamische Verhalten jeder elektromagnetischen Einrichtung darstellt, zusammenfaßt, und daß durch Matrizenumwandlung des Zustandsvektors, der das dynamische Verhalten des beweglichen Organs und jeder elektromagnetischen Einrichtung darstellt, mittels eines Strategieoperators zur optimierten Steuerung ein Steuersignal für jede elektromagnetische Einrichtung erzielt wird.

2. Verfahren nach Anspruch 1, dadurch gekennzeichnet, daß die Variable, die das dynamische Verhalten jeder elektromagnetischen Einrichtung darstellt, die Stärke (I) des durch diese fließenden Stroms ist.

**3.** Verfahren nach Anspruch 1 oder 2, dadurch gekennzeichnet, daß der Strategieoperator zur optimierten Steuerung einerseits durch Modellierung in Form von Zustandsdarstellungen des dynamischen Verhaltens des beweglichen Organs und der elektromagnetischen Einrichtungen und andererseits durch Minimierung eines Quadratkriteriums erzielt wird.

**4.** Vorrichtung zur optimierten Steuerung elektromagnetischer Einrichtungen zur Positionierung mit aktiver magnetischer Lagerung eines beweglichen Organs, wie z. B. eines Läufers einer Drehmaschine, zur Durchführung des Verfahrens nach einem der vorhergehenden Ansprüche, die Mittel (3) zur Messung des dynamischen Verhaltens des Organs und einer Variablen, die das dynamische Verhalten jeder elektromagnetischen Einrichtung darstellt, Mittel (5) zum Zerlegen des Reaktionsverhaltens des Organs in jede seiner Festkörper-Schwingungen und seiner durchlaufenen und angenäherten elastischen Schwingungen, um den nominalen Betriebspunkt des Organs zu erzielen, sowie Mittel (5, 7) zur Steuerung der genannten elektromagnetischen Einrichtungen abhängig von den genannten Reaktionen und von der Variablen, die das dynamische Verhalten jeder elektromagnetischen Einrichtung darstellt, um das dynamische Verhalten des Organs zu kontrollieren, aufweist, dadurch gekennzeichnet, daß die Steuerungsmittel (5) Mittel zur Darstellung des dynamischen Verhaltens des beweglichen Organs und der elektromagnetischen Einrichtungen durch einen Zustandsvektor (X) umfassen, der die Schwingungsreaktionen hinsichtlich Verschiebungsrichtung (q) und Frequenz (q̇) der Festkörper-Schwingungen und der durchlaufenen und angenäherten elastischen Schwingungen zur Erzielung des nominalen Betriebspunkts des Organs und die Variable (I), die das dynamische Verhalten jeder elektromagnetischen Einrichtung darstellt, zusammenfaßt, und daß die Steuerungsmittel (5) Mittel zur Erzeugung eines Steuersignals für jede elektromagnetische Einrichtung durch Matrizenumwandlung des Zustandsvektors, der das dynamische Verhalten des beweglichen Organs und jeder elektromagnetischen Einrichtung darstellt, mittels eines Strategieoperators zur optimierten Steuerung umfassen.

**5.** Vorrichtung nach Anspruch 4, dadurch gekennzeichnet, daß sie Mittel (3) zur Messung des durch jede elektromagnetische Einrichtung fließenden Stroms aufweist, wobei dieser Strom die Variable bildet, die das dynamische Verhalten jeder elektromagnetischen Einrichtung darstellt.

**6.** Vorrichtung nach Anspruch 4 oder 5, dadurch gekennzeichnet, daß die Steuerungsmittel (5) Mittel zur Bestimmung des Strategieoperators zur optimierten Steuerung durch Modellierung in Form von Zustandsdarstellungen des dynamischen Verhaltens des beweglichen Organs und der elektromagnetischen Einrichtungen und durch Minimierung eines Quadratkriteriums aufweist.

**7.** Vorrichtung nach einem der Ansprüche 4 bis 6, dadurch gekennzeichnet, daß die Steuerungsmittel eine Rechen- und Steuereinheit (5) aufweisen, deren Eingang über Analog-Digital-Umsetzer (4) mit den Mitteln (3) zur Messung des dynamischen Verhaltens des beweglichen Organs und der Variablen, die das dynamische Verhalten jeder elektromagnetischen Einrichtung darstellt, verbunden ist, und deren Ausgang über Digital-Analog-Umsetzer (6) mit Verstärkereinrichtungen (7) verbunden ist, um die genannten elektromagnetischen Einrichtungen zu steuern und das dynamische Verhalten des Organs zu beherrschen.

**Claims**

**1.** Method of optimal control of the electromagnetic positioning means (2) employing active magnetic levitation of a flexible component (1), such as a rotor of a rotating machine, in which the dynamic behaviour of the component and a variable representing the dynamic behaviour of each electromagnetic means are acquired, the response behaviour of the component is decomposed into each of its solid-body modes and of its elastic modes passed through or approached to reach the nominal operating point of the component, and the said electromagnetic means (2) are controlled as a function of the said responses and of the variable representing the dynamic behaviour of each electromagnetic means, in order to monitor the dynamic behaviour of the component, characterized in that the dynamic behaviours of the flexible component and of the electromagnetic means are represented by a state vector (X) which combines the modal responses in displacement (q) and velocity (q̇) of the solid-body modes and of the elastic modes passed through or approached to reach the nominal operating point of the component and the variable (I) representing the dynamic behaviour of each electromagnetic means, and in that a control signal for each electromagnetic means is obtained by matrix transformation of the state vector representing the dynamic behaviours of the flexible component and each electromagnetic means, with the aid of an optimal control strategy operator.

**2.** Method according to Claim 1, characterized in that the variable representing the dynamic behaviour of each electromagnetic means is the strength of the current (I) flowing through it.

3. Method according to Claim 1 or 2, characterized in that the optimal control strategy operator is obtained, on the one hand, by modelling in the form of a state representation of the dynamic behaviours of the flexible component and of the electromagnetic means and, on the other hand, by minimization of a quadratic criterion.

4. Device for optimal control of electromagnetic positioning means employing active magnetic levitation of a flexible component, such as a rotor of the rotating machine, for implementing the method according to any one of the preceding claims, of the type including means (3) for acquisition of the dynamic behaviour of the component and of a variable representing the dynamic behaviour of each electromagnetic means, means (5) for decomposing the response behaviour of the component into each of its solid-body modes and its elastic modes passed through or approached to reach the nominal operating point of the component and means (5, 7) for controlling the said electromagnetic means as a function of the said responses and of the variable representing the dynamic behaviour of each electromagnetic means, in order to monitor the dynamic behaviour of the component, characterized in that the control means (5) comprise means for representing the dynamic behaviours of the flexible component and of the electromagnetic means by a state vector (X) which combines the modal responses in displacement (q) and velocity ($\dot{q}$) of the solid-body modes and of the elastic modes passed through or approached to reach the nominal operating point of the component and the variable (I) representing the dynamic behaviour of each electromagnetic means, and in that the control means (5) comprise means for determining a control signal for each electromagnetic means by matrix transformation of the state vector representing the dynamic behaviours of the flexible component and of each electromagnetic means, with the aid of an optimal control strategy operator.

5. Device according to Claim 4, characterized in that it includes means (3) for measuring the current flowing through each electromagnetic means, this current constituting the variable representing the dynamic behaviour of each electromagnetic means.

6. Device according to Claim 4 or 5, characterized in that the control means (5) include means for determining the optimal control strategy operator by modelling in the state representation form the dynamic behaviours of the flexible component and of the electromagnetic means and by minimization of a quadratic criterion.

7. Device according to any one of Claims 4 to 6, characterized in that the control means comprise a calculation and control unit (5), the input of which is connected through analog/digital conversion means (4) to the means (3) for acquiring the dynamic behaviour of the component and the variable representing the dynamic behaviour of each electromagnetic means, and the output of which is connected through digital/analog conversion means (6) to amplification means (7) for controlling the said electromagnetic means and monitoring the dynamic behaviour of the component.

**FIG.1**

EP 0 500 464 B1

```
                    ┌─────────────────────┐
                    │   Initialisation    │      10
                    │      i = 0          │  ↙
                    └─────────────────────┘
                              │
                              ↓                         ┌──────────────────┐
                    ┌──────────────┐   11               │  Déclenchement   │   12
               →────│  i = i + 1   │←──────────────────│     Horloge      │  ↙
               │    └──────────────┘                    └──────────────────┘
               │              │
               │              ↓
               │    ┌──────────────────────────┐   13
               │    │  Scrutation des cartes    │  ↙
               │    │  d'acquisition . Mesures: │
               │    │                           │
               │    │    Position  y (i)        │
               │    │    Vitesse   ẏ (i)        │
               │    │    Intensité I (i)        │
               │    └──────────────────────────┘
               │              │
               │              ↓
               │    ┌──────────────────────────┐   14
               │    │ Conversion Analogique/    │  ↙
               │    │ numérique                 │
               │    └──────────────────────────┘
               │              │
               │              ↓
               │    ┌──────────────────────────┐   15
               │    │ Transfert des mesures     │  ↙
               │    │ numerisées en mémoire     │
               │    │ centrale du micro.        │
               │    │ calculateur               │
               │    └──────────────────────────┘
               │              │
               │              ↓
               │    ┌──────────────────────────┐   16
               │    │ Reconstruction du vecteur │  ↙
               │    │ d'état X(i)               │
               │    └──────────────────────────┘
               │              │
               │              ↓
 ┌──────────────┐          ┌──────────────────────────┐   17
 │Conditionneurs│   27     │ Calcul de l'écart e(i)    │  ↙
 └──────────────┘  ↙       └──────────────────────────┘
               ↑              │
```

## FIG.2A

$\dot{y}$ (i)

Position y (i)

Vitesse ẏ (i)

Intensité I (i)

Reconstruction du vecteur d'état X(i)
$X(i) = fonction \{I(i), y(i), \dot{y}(i), X(i-1), u(i-1)\}$

Calcul de l'écart e(i)
$e(i) = y(i) - \mathfrak{z}$

de Fig 2B                    vers Fig 2B

vers Fig.2A          de Fig.2A

Intégration numérique de l'écart
$v(i+1) = v(i) + \Delta t\, e(i)$

18

Calcul de la commande
en mémoire centrale
$U(i) = Nx_3 - Mv(i) - LX(i)$

19

Stockage de $U(i)$ et $X(i)$ en mémoire
pour reconstruction du vecteur
d'état $x(i+1)$ à l'instant suivant

20

Transfert du vecteur de commande $U(i)$
sur la carte de sortie

21

Conversion numérique / Analogique
du vecteur de commande

22

## FIG.2B

Amplification de la commande

23

Moyens électromagnétiques

24

Organe flexible

25

Capteurs $\begin{cases} \text{déplacement} \\ \text{vitesse} \\ \text{intensité} \end{cases}$

26